# EUROPEAN PATENT SPECIFICATION

(11) **EP 2 146 854 B1**
(45) Date of publication and mention of the grant of the patent: **21.08.2013**
(21) Application number: 08735578.0
(22) Date of filing: 28.03.2008
(51) Int. Cl.: F25B 41/06, B60H 1/32, B60H 1/00

(54) **Method for operating an AIR-CONDITIONING SYSTEM, IN PARTICULAR FOR A MOTOR VEHICLE**
Verfahren zum Betrieb einer KLIMAANLAGE, INSBESONDERE FÜR EIN KRAFTFAHRZEUG
Procédé de commande d'un SYSTÈME DE CLIMATISATION, EN PARTICULIER POUR UN VÉHICULE À MOTEUR

(30) Priority: 29.03.2007 DE 102007015185
(43) Date of publication of application: 27.01.2010
(73) Proprietor: Valeo Klimasysteme GmbH, 96476 Rodach (DE)
(72) Inventor: HAUSSMANN, Roland, 69168 Wiesloch (DE); SONDERMANN, Mark, 96479 Weitramsdorf (DE)
(74) Representative: Vieillevigne, Sébastien Nicolas Bernard
(86) International application number: PCT/EP2008/053755
(87) International publication number: WO 2008/119768

(56) References cited:
- EP-A- 1 749 681
- WO-A-2007/006632
- DE-A1- 19 631 914
- US-B1- 6 301 911

## Description

The invention relates to a method for operating an air-conditioning system in particular for a motor vehicle.

Air-conditioning systems for motor vehicles are known which have different technical structures and comprise different refrigerants. Regardless of the respective design, most of the effort with regard to further developing air-conditioning systems is presently aimed at reducing the amount of power required to operate the air-conditioning system. Reducing this power consumption, as far as possible while retaining the same comfort and the same response behaviour of the air-conditioning system, leads to a reduction in fuel consumption of the vehicle.

One type of modern air-conditioning system uses an externally controlled compressor, an internal heat exchanger which transfers heat from the used refrigerant on the high-pressure side to the refrigerant on the low-pressure side, and an evaporator with a thermostatic expansion valve which is usually equipped with a cross-charge filling in the control head. The thermostatic expansion valve controls the volume flow of refrigerant as a function of the temperature and pressure of the refrigerant at the outlet of the evaporator.

Due to the use of the internal heat exchanger, such an air-conditioning system in principle has a relatively good efficiency, but not in all operating states. Using a thermostatic expansion valve, an approximately constant superheat of the refrigerant to around 3 K at the outlet of the evaporator can be maintained only in states with a high required cooling power and a low evaporation temperature or a low required cooling power and a high evaporation temperature. However, when a low cooling power at low evaporation temperatures or a high cooling power at high evaporation temperatures is required, the refrigerant is overheated to between 8 K and 15 K at the outlet of the evaporator when thermostatic expansion valves are used. This is undesirable since the efficiency of the evaporator is then reduced and the temperatures of the refrigerant at the outlet of the compressor significantly increase. Furthermore, the capacity of the internal heat exchanger has to be limited since otherwise, due to the considerable superheat of the refrigerant in some operating states, the service life of the compressor might be impaired on account of the high refrigerant temperatures then occurring at the outlet of the compressor. US 6301911 discloses a method according to the preamble of claim 1.

DE 100 13 717 A1 discloses an air-conditioning system in which an electronic expansion valve is used instead of a thermostatic expansion valve. Said electronic expansion valve is controlled as a function of the temperature of the refrigerant at the outlet of the evaporator. However, the superheat of the refrigerant must be controlled to a range from 10 K to 15 K in order to increase the temperature of the refrigerant at the outlet of the evaporator. The consequences of such considerable superheat are a poorer temperature homogeneity, a loss of efficiency of the evaporator, and an excessively high temperature of the refrigerant at the outlet of the compressor, which leads to a reduction in service life.

The problem on which the invention is based is that of increasing the overall efficiency of an air-conditioning system which operates according to the Carnot principle and uses R134a or a suitable alternative as the refrigerant.

In order to solve this problem, according to the invention there is provided a method for operating an air-conditioning system, in particular for a motor vehicle, comprising an externally controlled compressor, a condenser, a throttle, an evaporator and an internal heat exchanger, wherein the throttle is an electronic expansion valve. In order to solve this problem, there is also provided a method for operating an air-conditioning system, in particular for a motor vehicle, comprising an externally controlled compressor, a condenser, a throttle, an evaporator and an internal heat exchanger, wherein the throttle is electronically controlled. The method according to the invention make it possible to keep approximately constant the refrigerant temperature at the inlet of the internal heat exchanger. To this end, a sensor may be provided for detecting the temperature of the refrigerant at the outlet of the evaporator. By limiting the superheat of the refrigerant at the inlet of the internal heat exchanger, the latter can be better designed for the operating conditions which occur, and in particular can be made larger without any risk of the refrigerant having an unacceptably high temperature at the outlet of the internal heat exchanger in some critical operating states.

According to the invention, it is provided in particular that the superheat of the refrigerant at the inlet of the internal heat exchanger is limited to at most 5 K. Since the superheat at the inlet of the internal heat exchanger is only in a range from 0 to 5 K and it is no longer possible for very high superheat of 5 to 20 K to take place at the inlet, the internal heat exchanger can be made larger. As a result of this higher capacity of the internal heat exchanger, there is no operating state of the air-conditioning system in which liquid refrigerant enters the compressor, even in phases with a relatively high outflow of liquid from the evaporator. As a result, the overall efficiency of the refrigerant circuit is increased, since no heat losses occur from the high-pressure side to the low-pressure side in the compressor. Losses of efficiency of the evaporator are also prevented. Limiting the superheat of the refrigerant to at most 5 K also ensures that a foam consisting of refrigerant and oil is always located in the suction line from the evaporator to the internal heat exchanger, so that any pressure pulse noises occurring in the compressor are not transferred via the suction line to the evaporator, since the oil/refrigerant foam dampens the sound propagation.

According to the invention, a sensor is provided for detecting the temperature of the refrigerant at the outlet of the compressor. This makes it possible for different efficiencies of the internal heat exchanger, which occur with changing volume flows of refrigerant, can still be compensated, so that a constant temperature can be maintained at the compressor outlet (final compression temperature). The internal heat exchanger can thus be dimensioned with an even greater capacity since the final compression temperature can be influenced directly via the throttle effect of the electronic injection valve. Advantageously, this temperature is kept in the range of the maximum possible temperature for the compressor and the lines, i.e. 110°C to 130°C. In conjunction with the high-capacity internal heat exchanger, this makes it possible to limit the superheat of the refrigerant at the outlet of the evaporator to a range from 0 K to 20 K, particularly between 0 K and 7 K and preferably to a range from 2 K to 4 K. For this purpose, it may be provided that the throttle is controlled as a function of the refrigerant temperature at the outlet of the compressor. In this way, the maximum temperature of the refrigerant at the outlet of the compressor can always be kept in a range which is advantageous both for the efficiency and the service life of the compressor when a large internal heat exchanger is used which is able in all operating states to evaporate the refrigerant leaving the evaporator in the liquid state. This high temperature at the outlet of the compressor, which can be regarded as almost constant compared to conventional air-conditioning systems, ensures that no operating states occur in which liquid refrigerant enters the compressor. As a result, the overall efficiency of the refrigerant circuit is increased, since no heat losses occur from the high-pressure side to the low-pressure side in the compressor. Losses of efficiency of the evaporator are also avoided since the superheat in the evaporator is also kept in a range from 0 K to 20 K and particularly between 0 K and 7 K, so that the entire inner surface of the evaporator is wetted with evaporating liquid refrigerant.

It is according to the invention provided that the throttle controls the volume flow of refrigerant in such a way that the refrigerant temperature at the outlet of the compressor is kept in the range from 90°C to 160°C, preferably in the range from 120°C to 130°C. In particular, a refrigerant temperature in the range from 120°C to 130°C which can be regarded as being approximately constant ensures a high overall efficiency of the refrigerant circuit with a very long service life of the compressor.

Advantageous embodiments of the invention will emerge from the dependent claims.

The invention will be described below with reference to various embodiments which are shown in the appended drawings. In these drawings:
- Fig. 1 schematically shows an example of an air-conditioning system according to the state of the art;
- Fig. 2 schematically shows an air-conditioning system according to an embodiment; and
- Fig. 3 shows a condenser.

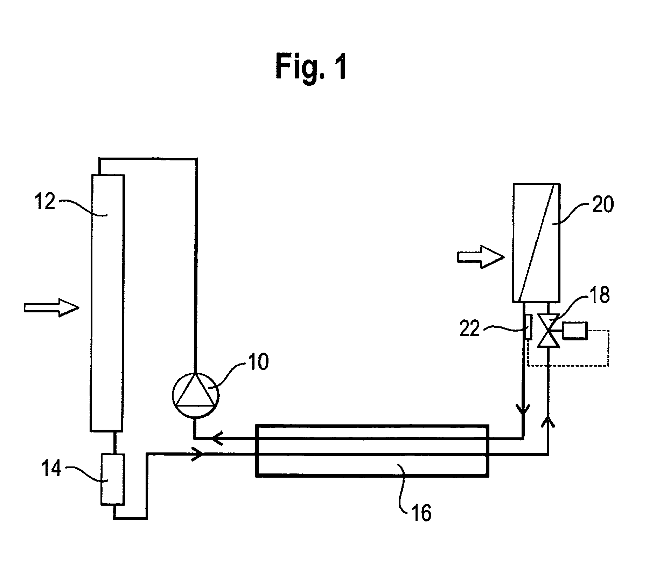

The figure 1 schematically shows an air-conditioning system which comprises an externally controlled compressor 10, a condenser 12, a collector 14, an internal heat exchanger 16, a throttle 18 and an evaporator 20. The collector 14 may optionally be provided with dryers and filters. The refrigerant used is R134a or a suitable alternative.

The throttle 18 is formed by an electronically controlled expansion valve which is controlled as a function of the temperature of the refrigerant at the outlet of the evaporator 20. For this purpose, a temperature sensor 22 is provided there. In this way, it can be ensured that the refrigerant always leaves the evaporator 20 with superheat in the range from 0 K to 20 K. Particularly, the superheat of the refrigerant leaving the evaporator 20 is between 0K and 5K and preferably in a range from 2 K to 4 K.

The control unit, which processes the signals from the sensor 22 and controls the throttle 18, is not shown in the figure 1 for the sake of better clarity.

In addition, a pressure sensor (not shown) can be provided at the outlet of the evaporator 20. In this way, the pressure of the refrigerant is measured.

According to a preferred alternative of the first example, the temperature sensor 22 and the pressure sensor are integrated in a single component.

In accordance, with the measurement of the pressure of the refrigerant at the outlet of the evaporator 20, the superheat is directly determined. Indeed, the saturation temperature of the refrigerant can be directly derived from the pressure of the refrigerant. Therefore, the superheat is defined by the difference between the measured temperature of the refrigerant at the outlet of the evaporator 20 and the saturation temperature corresponding to the measured refrigerant pressure at the outlet of the evaporator 20.

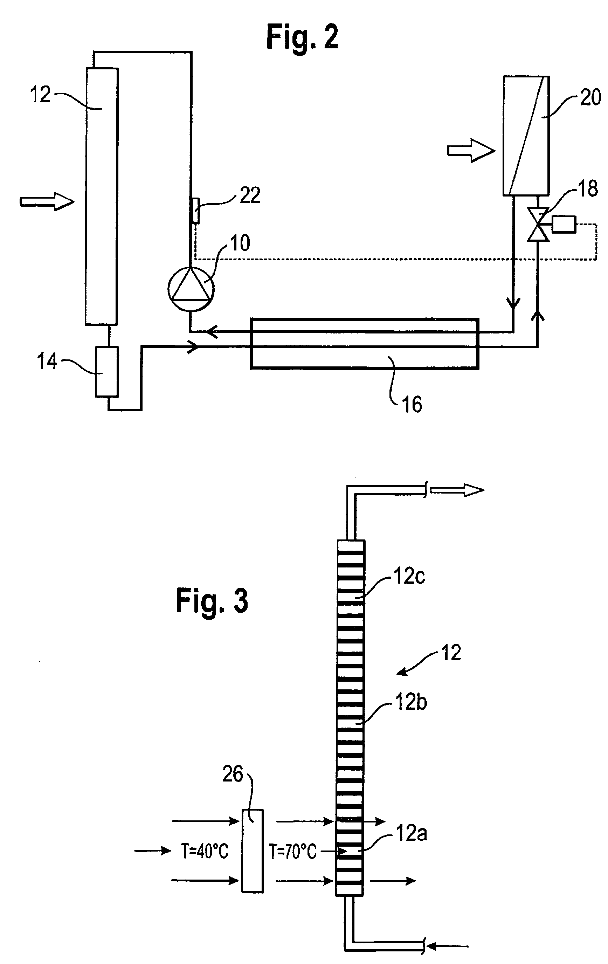

The figure 2 shows an air-conditioning system according to an embodiment. The same references are used for the components known from the first embodiment, and in this respect reference is made to the embodiment above.

In the embodiment, too, an electronically controlled expansion valve is used as the throttle 18. The difference compared to the first embodiment is that the expansion valve 18 is controlled as a function of the temperature of the refrigerant at the outlet of the compressor. For this purpose, a sensor 24 is provided there. The throttle 18 and thus the volume flow of refrigerant are controlled in such a way that the refrigerant temperature at the outlet of the compressor is kept relatively constant in the range from 120°C to 130°C.

The present invention is related to a method for operating an air-conditioning system as defined in relation with figures 1 and 2. This air-conditioning system comprises an externally controlled compressor 10, a condenser 12, a throttle 18, an evaporator 20 and an internal heat exchanger 16. The throttle 18 is electronically controlled.

Nevertheless, an effective control of an electronically controlled expansion valve requires the use of control parameters which make it possible to provide a quick response to a change of one of the control parameters.

Consequently, some parameters of the air-conditioning system could not be used. For example, the evaporator air outlet homogeneity is not an efficient parameter for the control of the electronically controlled expansion valve 18. Actually, it takes a too long time between the time when parameter is modified for the change of the opening of the throttle 18 and the time when the air outlet homogeneity of the evaporator 20 is changed.

During this time period, the evaporator 20, connection lines and the compressor 10 are flooded with liquid refrigerant. Therefore, the evaporation and the cooling are not only taking place in the evaporator 20. This impacts the efficiency which is merely impaired.

Such a quick response to control the electronically controlled expansion valve 18 can be obtained by using the evaporator outlet superheat as a control parameter of the opening of the throttle 18.

Nevertheless, the evaporator outlet superheat has also some drawbacks. This parameter is a very dynamic value. There are quick variations due to speed variations which entails quick low pressure falls. This results in a quite sensitive ands difficult control of the electronically controlled expansion valve 18.

The evaporator outlet superheat parameter has also a disadvantage regarding the liquid quantity estimation in the suction lines. For a superheat comprises between 0 K and 5K, the amount of liquid refrigerant, which is partly merged with oil, is completely undefined.

According to the present invention, the method makes it possible to control the throttle 18 in such a way that the refrigerant temperature at the inlet of the internal heat exchanger 16 is kept approximately constant.

Moreover, the method enables that the superheat of the refrigerant at the inlet of the internal heat exchanger 16 is limited to at most 5 K.

Accordingly, the superheat of the refrigerant at the outlet of the evaporator 20 is limited to a range from 0 K to 20 K, particularly between 0K and 7K. Preferably, the superheat is in a range from 2 K to 4 K.

Finally, the method is defined so that the throttle 18 controls the volume flow of refrigerant in such a way that the refrigerant temperature at the outlet of the compressor 10 is kept in the range from 90°C to 160°C, preferably in the range from 120°C to 130°C.

According to the invention, the throttle 18 is controlled as a function of the refrigerant temperature at the outlet of the compressor 10.

The present method will be hereafter detailed. Indeed, in order to increase the air-conditioning system efficiency and to reduce the annual fuel consumption, the throttle 18, which is preferably a electronically controlled expansion valve, must be controlled according to different parameters of the air-conditioning system such as the temperature at the outlet of the compressor 10, the temperature at the outlet of the evaporator 20, ... in order to ensure that the superheat at the inlet of the internal heat exchanger 16 is limited to at most 5 K, that the superheat of the refrigerant at the outlet of the evaporator 20 is limited to a range from 0 K to 20 K, particularly between 0K and 7K and preferably in a range from 2 K to 4 K.

Moreover, the control of the throttle 18 should be defined in such a way that the discharge temperature at the outlet of the compressor 10 is maximum.

The present method uses, in the start phase, a start calculated value to define the initial cross section opening of the throttle 18. After a short stabilizing period, the opening cross section is adapted from the start calculated value according to the current discharge temperature.

More specifically, the start value of the cross section opening of the throttle 18 is determined from the evaporator load, the high pressure and the low pressure of the air-conditioning system.

The method is part of a specific comfort software which manages the air-conditioning system. The comfort software is stored in a chip located within the control panel.

Different parameters used in the calculation of the start value of the cross section opening of the throttle 18 can be separately determined.

The low pressure is estimated according to the air outlet target value, which is one of the parameter of the comfort software, the engine speed and the compressor control current.

The evaporator load is estimated according to air mass flow, for example based on the blower speed or the blower current, the air inlet temperature and the low pressure.

Once the start value of the cross section opening of the throttle 18 is determined, this value is maintained as a control value for the throttle 18.

After a short stabilization time period, for example of 1 min to 3 min, the method defines the difference between the measured discharge temperature and a theoretically calculated discharge temperature of the compressor 10.

The theoretically discharge temperature is calculated in accordance with the used refrigerant parameters, e.g the evaporating temperature which is determined with the estimated suction pressure, the air inlet temperature and the measured high pressure.

If the measured discharge temperature of the compressor 10 is at least 10 K higher than the theoretically calculated discharge temperature of the compressor 10 and/or the air outlet temperature difference is higher than 3 K to 6 K, the value of the cross section of the throttle 18 is modified by a factor F1.

According to a preferred embodiment of the present method, the factor F1 is included within a range between 1,01 and 1,3.

The value of the factor F1 is dependent upon the difference between the measured discharge temperature and the theoretically calculated discharge temperature.

If the measured discharge temperature of the compressor 10 is at least 10K smaller than the theoretically calculated discharge temperature of the compressor and/or the air outlet temperature difference is less than 3 to 6K, the value of the cross section of the throttle 18 is modified by a factor F2.

According to a preferred embodiment of the present method, the factor F2 is included within a range between 0,9 and 0,99.

For cross counter-flow evaporators, the discharge temperature is controlled in a higher range between 100°C and 135°C. In those specific arrangements, the air-conditioning system can be used without any internal heat exchanger 16 without loss of efficiency.

In case of a cross counter-flow evaporators, the refrigerant outlet temperature of the evaporator 20 can be increased up to the air inlet temperature. For ambient temperature comprised between 20°C to 40°C, the refrigerant outlet temperature is 17°C to 37°C. Therefore, a further heat up of the refrigerant in the internal heat exchanger 16 is not possible or limited because of the higher limit of the discharge temperature of 135°C.

The present method is particularly efficient. The enthalpy and the liquid quantity in the evaporator 20 can be clearly defined by measuring the discharge temperature at the outlet of the compressor 10. Indeed, with the discharge temperature, outlet conditions of the evaporator 20 (i.e enthalpy, liquid quantity, superheat, ...) can be obtained for every driving conditions.

Moreover, presently, each vehicle, comprising an air-conditioning system, already has a high pressure sensor to control the condenser fan. Therefore, the cost increase required to have a combined temperature/pressure sensor is very low.

Furthermore, the pre-defined start value is used only for the start phase i.e only for the first minutes. This makes it possible to optimize the start conditions of the air-conditioning system and to avoid the throttle hunting. In addition, in order to prevent uncontrolled actions of the throttle 18 during the start or quick engine speed variations, the cross section opening of the throttle 18 is theoretically calculated with parameters of the vehicle already available, particularly on the vehicle network.

If this calculated cross section opening of the throttle 18 is not appropriate, the method modifies the value of the cross section opening of the throttle 18.

The control of the electronically controlled expansion valve 18 with the discharge temperature makes it possible to control the evaporator outlet homogeneity. In addition, when the evaporator air outlet temperature difference is too high, the refrigerant mass flow can be also increased.

The control of the electronically controlled expansion valve 18 increases of the condenser 12 performance by higher inlet temperatures in the hot gas zone.

When the refrigerant mass flow is low, the present method allows managing the evaporator 20 with wet outlet conditions during a specific time period, for instance every 10 min to 60 min, in order to recycle oil which is gathered in the evaporator.

Finally, the present method has a particular advantage in handling noise level control. In low load critical conditions, the evaporator outlet superheat can also be decreased so as to avoid in undesired noise in the air-conditioning system.

## Claims

1. Method for operating an air-conditioning system, in particular for a motor vehicle, comprising an externally controlled compressor (10), a condenser (12), a throttle (18), an evaporator (20) and an internal heat exchanger (16), **characterised in that** the throttle (18) is electronically controlled as a function of the refrigerant temperature at the outlet of the compressor (10) in such a way that the refrigerant temperature at the outlet of the compressor (10) is kept in the range from 90°C to 160°C.

2. Method according to claim 1, **characterised in that** the throttle is controlled in such a way that the refrigerant temperature at the inlet of the internal heat exchanger (16) is kept approximately constant.

3. Method according to claim 1 or 2, **characterised in that** the superheat of the refrigerant at the inlet of the internal heat exchanger (16) is limited to at most 5 K.

4. Method according to any of claims 1 to 3, **characterised in that** the superheat of the refrigerant at the outlet of the evaporator (20) is limited to a range from 0 K to 20 K, particularly between 0K and 7K and preferably to a range from 2 K to 4 K.

5. Method according to any of claims 1 to 4, **characterised in that** the throttle (18) controls the volume flow of refrigerant in such a way that the refrigerant temperature at the outlet of the compressor (10) is kept in the range from 120°C to 130°C.

6. Method according to any of claims 1 to 5, **characterised in that** it comprises a step consisting in calculating a start calculated value to define an initial cross section opening of the electronically controlled throttle (18).

7. Method according to claim 6, **characterised in that**, the start calculated value of the cross section opening of the throttle (18) is determined from the load of the evaporator (20), the high pressure and the low pressure of the air-conditioning system.

8. Method according to claim 6 or 7, **characterised in that**, after a short stabilizing period, the opening cross section of the electronically controlled throttle (18) is adapted from the start calculated value according to a current discharge temperature.

9. Method according to claim 8, **characterised in that** it comprises a step consisting in calculating a difference between a measured discharge temperature and a theoretically calculated discharge temperature of the compressor (10).

10. Method according to claim 9, **characterised in that**, if the measured discharge temperature of the compressor (10) is at least 10 K higher than the theoretically calculated discharge temperature of the compressor (10) and/or the air outlet temperature difference is higher than 3 K to 6 K, the value of the cross section of the throttle (18) is modified by a factor F1.

11. Method according to claim 10, **characterised in that** the factor F1 is included within a range between 1,01 and 1, 3.

12. Method according to claim 9, **characterised in that**, if the measured discharge temperature of the compressor (10) is at least 10 K smaller than the theoretically calculated discharge temperature of the compressor (10) and/or the air outlet temperature difference is less than 3 to 6K, the value of the cross section of the throttle (18) is modified by a factor F2.

13. Method according to claim 12, **characterised in that** the factor F2 is included within a range between 0,9 and 0,99.

## Patentansprüche

1. Verfahren zum Betrieb einer Klimaanlage, insbesondere für ein Kraftfahrzeug, das einen extern gesteuerten Kompressor (10), einen Kondensator (12), eine Drosselklappe (18), einen Verdampfer (20) und einen internen Wärmeaustauscher (16) aufweist, **dadurch gekennzeichnet, dass** die Drosselklappe (18) elektronisch als eine Funktion der Kühlmitteltemperatur an dem Auslass des Kompressors (10) derart gesteuert ist, dass die Kühlmitteltemperatur an dem Auslass des Kompressors (10) in dem Bereich von 90 °C bis 160 °C gehalten wird.

2. Verfahren nach Anspruch 1, **dadurch gekennzeichnet, dass** die Drosselklappe derart gesteuert ist, dass die Kühlmitteltemperatur an dem Einlass des internen Wärmeaustauschers (16) in etwa konstant gehalten wird.

3. Verfahren nach Anspruch 1 oder 2, **dadurch gekennzeichnet, dass** die Überhitzungswärme des Kühlmittels an dem Einlass des internen Wärmeaustauschers (16) auf maximal 5 K beschränkt ist.

4. Verfahren nach einem der Ansprüche 1 bis 3, **dadurch gekennzeichnet, dass** die Überhitzungswärme des Kühlmittels an dem Auslass des Verdampfers (20) auf einen Bereich von 0 K bis 20 K, insbesondere zwischen 0 K und 7 K und vorzugsweise auf einem Bereich von 2 K bis 4 K beschränkt ist.

5. Verfahren nach einem der Ansprüche 1 bis 4, **dadurch gekennzeichnet, dass** die Drosselklappe (18) den Kühlmittelvolumenstrom derart steuert, dass die Kühlmitteltemperatur an dem Auslass des Kompressors (10) in dem Bereich von 120 °C bis 130 °C gehalten wird.

6. Verfahren nach einem der Ansprüche 1 bis 5, **dadurch gekennzeichnet, dass** es einen Schritt aufweist, der darin besteht, einen berechneten Startwert zu berechnen, um einen anfänglichen Öffnungsquerschnitt der elektronisch gesteuerten Drosselklappe (18) zu definieren.

7. Verfahren nach Anspruch 6, **dadurch gekennzeichnet, dass** der berechnete Startwert des Öffnungsquerschnitts der Drosselklappe (18) ausgehend von der Last des Verdampfers (20), dem oberen und dem unteren Druck der Klimaanlage bestimmt wird.

8. Verfahren nach Anspruch 6 oder 7, **dadurch gekennzeichnet, dass** der Öffnungsquerschnitt der elektronisch gesteuerten Drosselklappe (18) nach einer kurzen Stabilisationsperiode von dem berechneten Startwert gemäß einer aktuellen Auslasstemperatur angepasst wird.

9. Verfahren nach Anspruch 8, **dadurch gekennzeichnet, dass** es einen Schritt aufweist, der darin besteht, einen Unterschied zwischen einer gemessenen Auslasstemperatur und einer theoretischen berechneten Auslasstemperatur des Kompressors (10) zu berechnen.

10. Verfahren nach Anspruch 9, **dadurch gekennzeichnet, dass**, wenn die gemessene Auslasstemperatur des Kompressors (10) mindestens 10 K höher ist als die theoretische berechnete Auslasstemperatur des Kompressors (10) und/oder der Luftauslass-Temperaturunterschied höher ist als 3 K bis 6 K, der Wert des Querschnitts der Drosselklappe (18) um einen Faktor F1 geändert wird.

11. Verfahren nach Anspruch 10, **dadurch gekennzeichnet, dass** der Faktor F1 innerhalb eines Bereichs zwischen 1,01 und 1,3 enthalten ist.

12. Verfahren nach Anspruch 9, **dadurch gekennzeichnet, dass**, wenn die gemessene Auslasstemperatur des Kompressors (10) mindestens 10 K kleiner ist als die theoretische berechnete Auslasstemperatur des Kompressors (10) und/oder wenn der Luftauslass-Temperaturunterschied niedriger ist als 3 bis 6 K, der Wert des Querschnitts der Drosselklappe (18) um einen Faktor F2 geändert wird.

13. Verfahren nach Anspruch 12, **dadurch gekennzeichnet, dass** der Faktor F2 innerhalb eines Bereichs von 0,9 und 0,99 enthalten ist.

## Revendications

1. Procédé d'exploitation d'un système de climatisation, notamment pour un véhicule motorisé, comprenant un compresseur (10) commandé depuis l'extérieur, un condenseur (12), un clapet d'étranglement (18), un évaporateur (20) et un échangeur de chaleur interne (16), **caractérisé en ce que** le clapet d'étranglement (18) est commandé électroniquement en fonction de la température du réfrigérant à la sortie du compresseur (10) de telle sorte que la température du réfrigérant à la sortie du compresseur (10) est maintenue dans la plage de 90 °C à 160 °C.

2. Procédé selon la revendication 1, **caractérisé en ce que** le clapet d'étranglement est commandé de telle sorte que la température du réfrigérant à l'entrée de l'échangeur de chaleur interne (16) est maintenue approximativement constante.

3. Procédé selon la revendication 1 ou 2, **caractérisé en ce que** la surchauffe du réfrigérant à l'entrée de l'échangeur de chaleur interne (16) est limitée à un maximum de 5 K.

4. Procédé selon l'une quelconque des revendications 1 à 3, **caractérisé en ce que** la surchauffe du réfrigérant à la sortie de l'évaporateur (20) est limitée à une plage de 0 K à 20 K, notamment de 0 K à 7 K et de préférence à une plage de 2 K à 4 K.

5. Procédé selon l'une quelconque des revendications 1 à 4, **caractérisé en ce que** le clapet d'étranglement (18) commande le débit volumique du réfrigérant de telle sorte que la température du réfrigérant à la sortie du compresseur (10) est maintenue dans la plage de 120 °C à 130 °C.

6. Procédé selon l'une quelconque des revendications 1 à 5, **caractérisé en ce qu'**il comprend l'étape consistant à calculer une valeur de départ calculée pour définir une section transversale d'ouverture initiale du clapet d'étranglement (18) à commande électronique.

7. Procédé selon la revendication 6, **caractérisé en ce que** la valeur de départ calculée de la section transversale d'ouverture du clapet d'étranglement (18) est déterminée à partir de la charge de l'évaporateur (20), de la haute pression et de la basse pression du système de climatisation.

8. Procédé selon la revendication 6 ou 7, **caractérisé en ce qu'**après une courte période de stabilisation, la section transversale d'ouverture du clapet d'étranglement (18) à commande électronique est adaptée à partir de la valeur de départ calculée en fonction d'une température de décharge courante.

9. Procédé selon la revendication 8, **caractérisé en ce qu'**il comprend une étape consistant à calculer une différence entre une température de décharge mesurée et une température de décharge théorique calculée du compresseur (10).

10. Procédé selon la revendication 9, **caractérisé en ce que** si la température de décharge mesurée du compresseur (10) est supérieure d'au moins 10 K à la température de décharge théorique calculée du compresseur (10) et/ou si la différence de température à la sortie d'air est supérieure à 3 K à 6 K, la valeur de la section transversale d'ouverture du clapet d'étranglement (18) est modifiée d'un facteur F1.

11. Procédé selon la revendication 10, **caractérisé en ce que** le facteur F1 est compris dans une plage entre 1,01 et 1,3.

12. Procédé selon la revendication 9, **caractérisé en ce que** si la température de décharge mesurée du compresseur (10) est inférieure d'au moins 10 K à la température de décharge théorique calculée du compresseur (10) et/ou si la différence de température à la sortie d'air est inférieure à 3 K à 6 K, la valeur de la section transversale d'ouverture du clapet d'étranglement (18) est modifiée d'un facteur F2.

13. Procédé selon la revendication 12, **caractérisé en ce que** le facteur F2 est compris dans une plage entre 0,9 et 0,99.
